# EUROPEAN PATENT APPLICATION

(11) **EP 4 276 220 A1**
(43) Date of publication of application: **15.11.2023**
(21) Application number: 22762897.1
(22) Date of filing: 04.02.2022
(51) Int. Cl.: C23C 28/00, C23C 2/12, H01M 10/613, H01M 10/625, H01M 10/651, H01M 10/6554, H01M 10/6556, H01M 10/6568, H01M 10/6571, H01M 50/20, H01M 50/24, H01M 50/249

(54) **BATTERY UNIT**

(30) Priority: 01.03.2021 JP 2021031636; 25.05.2021 JP 2021087652
(71) Applicant: NIPPON STEEL CORPORATION, Chiyoda-ku Tokyo 100-8071 (JP)
(72) Inventor: MIYAKE, Kyohei, Tokyo 100-8071 (JP); KOGA, Atsuo, Tokyo 100-8071 (JP); UEDA, Kohei, Tokyo 100-8071 (JP); MIKAZUKI, Yutaka, Tokyo 100-8071 (JP); NORITA, Katsunari, Tokyo 100-8071 (JP); MATSUI, Sho, Tokyo 100-8071 (JP); OKE, Takashi, Tokyo 100-8071 (JP)
(74) Representative: Zimmermann & Partner Patentanwälte mbB
(86) International application number: PCT/JP2022/004478
(87) International publication number: WO 2022/185840

(57) **Abstract**

This battery unit is a battery unit including a battery pack that houses a battery cell, and a water-cooling medium flow path formed outside a bottom surface of the battery pack, in which the water-cooling medium flow path of the battery pack is made of an Al-based plated steel sheet or an Al sheet.

## Description

### [Technical Field of the Invention]

The present invention relates to a battery unit.

The present application claims priority based on Japanese Patent Application No. 2021-31636 filed in Japan on March 1, 2021 and Japanese Patent Application No. 2021-87652 filed in Japan on May 25, 2021, the contents of which are incorporated herein by reference.

### [Related Art]

In the automobile field, an electric vehicle (EV) is being developed for CO₂ reduction. Among components used in EV automobiles, a battery pack that houses a battery cell serving as a power source needs to be provided with a cooling structure in order to prevent deterioration of the battery due to temperature rise. Hitherto, an air-cooling type has been the mainstream of the cooling structure, but in recent years, with an increase in a capacity of a battery, a water-cooling type having a high cooling capacity is increasingly adopted (for example, Patent Documents 1 and 2). In the water-cooling-type battery pack, a water-cooling medium flow path through which cooling water flows is formed outside the battery pack.

### [Citation List]

### [Patent Document]

[Patent Document 1]
   Japanese Unexamined Patent Application, First Publication No. 2020-107443
[Patent Document 2]
   Japanese Patent Publication No. 6125624

### [Summary of Invention]

### [Problems to be Solved by the Invention]

Here, since a long-life coolant (LLC) aqueous solution containing an organic component flows as a coolant in the water-cooling medium flow path, members constituting the water-cooling medium flow path are required to have high corrosion resistance to the coolant (coolant corrosion resistance). In addition, in a case where the cooling structure (specifically, the water-cooling medium flow path) is provided outside the battery pack, the battery pack and the cooling structure are exposed to an external environment because they are disposed on a bottom surface portion of an automobile. Therefore, members constituting the battery pack and the cooling structure are required to have corrosion resistance (external corrosion resistance) equivalent to that of a chassis of an automobile. However, a technique that satisfies such conditions has not been proposed so far.

Therefore, the present invention has been made in view of the above problems, and an object of the present invention is to provide a novel and improved battery unit capable of improving not only corrosion resistance to a coolant (coolant corrosion resistance) but also corrosion resistance to an external environment (external corrosion resistance).

### [Means for Solving the Problem]

In order to solve the above problems, according to an aspect of the present invention, there is provided a battery unit including a battery pack that houses a battery cell, and a water-cooling medium flow path formed outside a bottom surface of the battery pack, in which the water-cooling medium flow path of the battery pack is made of an Al-based plated steel sheet or an Al sheet.

Here, an interval between the water-cooling medium flow paths may be 40 mm or less.

In addition, the bottom surface of the battery pack may be made of an Al-based plated steel sheet or a member obtained by processing an Al sheet, and the water-cooling medium flow path may be in direct contact with the bottom surface of the battery pack.

In addition, the water-cooling medium flow path may be joined to a flow path upper lid made of an Al-based plated steel sheet or an Al sheet, and the water-cooling medium flow path may be joined to the bottom surface of the battery pack via the flow path upper lid.

In addition, an interval between the water-cooling medium flow paths may be 10 mm or more and 40 mm or less.

In addition, an interval between the water-cooling medium flow paths may be 10 mm or more and 40 mm or less, and a joint between the bottom surface of the battery pack and the water-cooling medium flow path may have a composite joint structure of a sealant and spot welding or a sealant and mechanical joining.

In addition, Si may be contained in a plating layer of the Al-based plated steel sheet.

In addition, a Si content in the Al-based plated steel sheet may be 2.0 mass% or more and 15 mass% or less.

In addition, a film containing a Zr-based component or a Ti-based component or a Si-based component as a main component may be formed as a chemical conversion coating film on a surface of the Al-based plated steel sheet or the Al sheet.

### [Effects of the Invention]

According to the above aspect of the present invention, it is possible to provide a novel and improved battery unit capable of improving not only corrosion resistance to a coolant (coolant corrosion resistance) but also corrosion resistance to an external environment (external corrosion resistance).

### [Brief Description of the Drawings]

FIG. 1 is a cross-sectional view illustrating an outline of a battery unit according to the present embodiment.
FIG. 2 is a cross-sectional view illustrating another example of the battery unit according to the present embodiment.
FIG. 3 is a cross-sectional view illustrating another example of the battery unit according to the present embodiment.
FIG. 4 is a cross-sectional view illustrating another example of the battery unit according to the present embodiment.
FIG. 5 is a cross-sectional view illustrating another example of the battery unit according to the present embodiment.

### [Embodiments of the Invention]

Hereinafter, preferred embodiments of the present invention will be described in detail with reference to the accompanying drawings. Note that a numerical range represented by "to" means a range including numerical values described before and after "to" as a lower limit value and an upper limit value. A numerical value indicated as "more than" or "less than" is not included in the numerical range.

### <1. Overall configuration of battery unit>

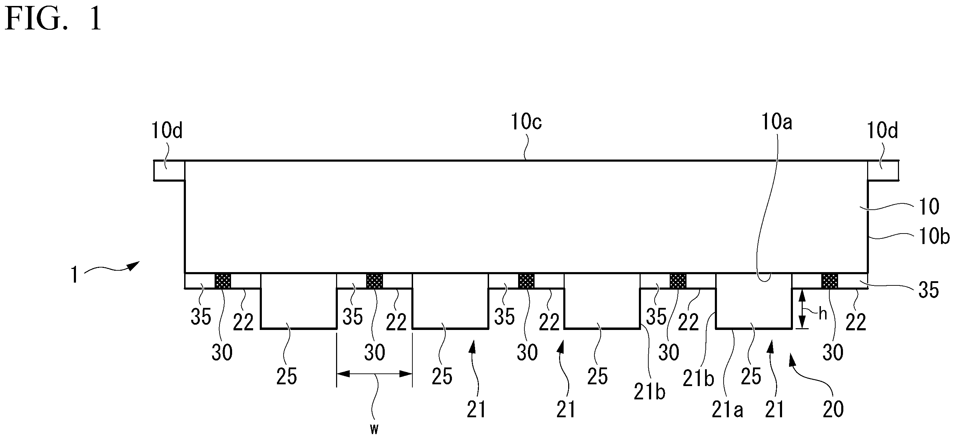

First, an overall configuration of a battery unit 1 according to the present embodiment will be described with reference to FIG. 1. FIG. 1 is a cross-sectional view (a cross-sectional view perpendicular to a bottom surface portion 10a of a battery pack 10) illustrating an outline of a battery unit 1 according to the present embodiment.

The battery unit 1 according to the present embodiment is provided outside (below) a bottom surface portion of an automobile. Therefore, the battery unit 1 is exposed to an external environment of an automobile. Therefore, the battery unit 1 is required to have corrosion resistance (external corrosion resistance) equivalent to that of a chassis of an automobile. Further, since a long-life coolant (LLC) aqueous solution containing an organic component flows as a coolant in a water-cooling medium flow path 25 of the battery unit 1, members constituting the water-cooling medium flow path 25 (a bottom surface portion 10a of a battery pack 10 and a cooling structure 20) are required to have high coolant corrosion resistance.

The battery unit 1 includes a battery pack 10 that houses a battery cell not shown, and a cooling structure 20 provided outside (below) a bottom surface portion 10a of the battery pack 10. The battery pack 10 includes a housing portion and a battery cell. The housing portion has a substantially rectangular cross section, and is divided into a bottom surface portion 10a, a side surface portion 10b, and an upper surface portion 10c. Of course, the structure of the battery pack 10 is not limited to this example.

The bottom surface portion 10a of the battery pack 10 faces the water-cooling medium flow path 25 to be described later and is in direct contact therewith. Therefore, the bottom surface portion 10a of the battery pack 10 is required to have corrosion resistance to a coolant (coolant corrosion resistance) in addition to external corrosion resistance. Therefore, in the present embodiment, the bottom surface portion 10a of the battery pack 10 is made of an Al-based plated steel sheet or an Al sheet (hereinafter also referred to as "Al-based plated steel sheet or the like"). The Al-based plated steel sheet or the like has high external corrosion resistance and high coolant corrosion resistance. Therefore, the bottom surface portion 10a of the battery pack 10 has high external corrosion resistance and coolant corrosion resistance. Details of the Al-based plated steel sheet or the like will be described later.

A thickness of the Al-based plated steel sheet or the like constituting the bottom surface portion 10a of the battery pack 10 is not particularly limited, but is, for example, preferably 0.2 to 1.2 mm, and more preferably 0.4 to 0.6 mm. In this case, the bottom surface portion 10a can be formed thin while maintaining a strength of the bottom surface portion 10a of the battery pack 10. Therefore, since a distance between a coolant and an internal structure of the battery pack 10 can be narrowed, cooling efficiency of the battery pack 10 can be enhanced, and cooling responsiveness of the battery pack 10 can be enhanced.

Materials of the side surface portion 10b and the upper surface portion 10c of the battery pack 10 are not particularly limited, but it is preferable that these are also made of the same Al-based plated steel sheet or the like as that constituting the bottom surface portion 10a. In particular, since the side surface portion 10b is exposed to an external environment, it is preferable that the side surface portion 10b is made of the same Al-based plated steel sheet or the like as that constituting the bottom surface portion 10a. The upper surface portion 10c and the side surface portion 10b are joined via a sealant 10d. The upper surface portion 10c is fixed to a bottom surface portion of a vehicle.

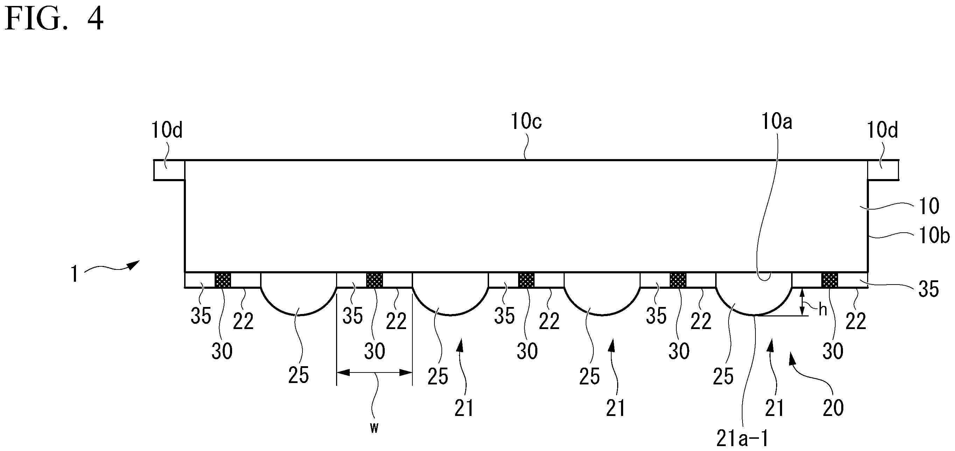

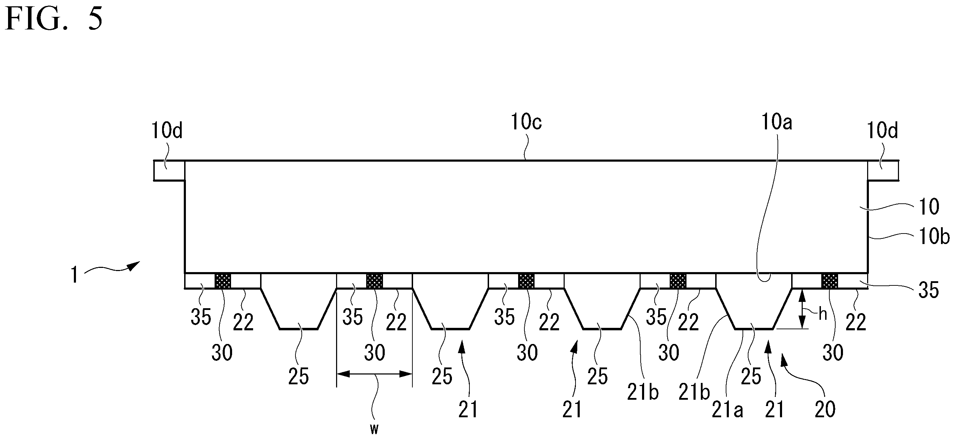

The cooling structure 20 is provided outside the bottom surface portion of the battery pack 10, and includes a plurality of flow path-forming portions 21 and a plurality of joint portions 22. The flow path-forming portion 21 has a substantially rectangular cross section, and the inside is a space. This space serves as the water-cooling medium flow path 25. The water-cooling medium flow path 25 is in direct contact with the battery pack 10. Of course, the cross-sectional shape of the flow path-forming portion 21 is not limited to this example, and may be, for example, a semicircular shape illustrated in FIG. 4, a trapezoidal shape illustrated in FIG. 5, or another shape. The water-cooling medium flow path 25 extends in a direction perpendicular to the paper surface of FIG. 1 (for example, a direction parallel to or perpendicular to a longitudinal direction of the bottom surface portion 10a of the battery pack 10), and is connected to a circulation path not shown. Of course, the extending direction of the water-cooling medium flow path 25 is not limited to this example, and may be curved on the bottom surface portion 10a, for example. For example, the water-cooling medium flow path 25 may have a U-shape in plan view. Then, the coolant flows through the circulation path and the water-cooling medium flow path 25. The coolant is cooled in the circulation path and then flows through the water-cooling medium flow path 25. The coolant absorbs heat of the battery pack 10 while flowing through the water-cooling medium flow path 25. Thereafter, the coolant is introduced into the circulation path again. That is, the coolant repeatedly flows through the circulation path and the water-cooling medium flow path 25 to repeatedly absorb heat of the battery pack 10.

Accordingly, the members constituting the water-cooling medium flow path 25, that is, the cooling structure 20 is required to have not only the external corrosion resistance described above but also coolant corrosion resistance. Therefore, in the present embodiment, the cooling structure 20 is made of an Al-based plated steel sheet or the like. The Al-based plated steel sheet or the like has high external corrosion resistance and high coolant corrosion resistance. For this reason, the cooling structure 20 has high external corrosion resistance and coolant corrosion resistance. Further, the Al-based plated steel sheet has a higher strength than that of an Al sheet. Here, the strength of the Al-based plated steel sheet or the like is, for example, tensile strength, and can be measured by a tensile test in accordance with the provision of JIS Z 2241. The Al sheet has a high thermal conductivity, but by forming a thin Al-based plated steel sheet, a thermal conductivity similar to that of the Al sheet can be realized. Therefore, in the present embodiment, since corrosion of the battery pack 10 and the cooling structure 20 by the coolant is suppressed, it is possible to suppress contamination (elution of components of the battery pack 10 or the cooling structure 20 into the coolant) that causes a decrease in thermal conductivity and clogging.

An interval between the water-cooling medium flow paths 25, in other words, a distance w between end portions in a width direction of adjacent flow path-forming portions 21 is not particularly limited, but is preferably 40 mm or less. In the example illustrated in FIG. 1, since the cross-sectional shape of the flow path-forming portion 21 is substantially rectangular, the distance w between end portions in a width direction of the flow path-forming portions 21 can be rephrased as a distance between side surface portions 21b of the flow path-forming portions 21. In the examples illustrated in FIGS. 4 and 5, a boundary portion between the flow path-forming portion 21 and the joint portion 22 is an end portion in a width direction of the flow path-forming portion 21. As a result, the width of the water-cooling medium flow path 25 can be widened, so that a contact area between the water-cooling medium flow path 25 and the bottom surface portion 10a, in other words, a contact area between the coolant and the battery pack 10 can be widened. When the Al-based plated steel sheet or the like according to the present embodiment is used, particularly high cooling efficiency can be obtained by setting the interval between the water-cooling medium flow paths 25 to 40 mm or less. Therefore, in the present embodiment, the cooling efficiency of the battery pack 10 can be enhanced. In particular, in the present embodiment, the bottom surface portion 10a of the battery pack 10 is made of an Al-based plated steel sheet or the like. Examples of heat transfer characteristics of the Al-based plated steel sheet or the like include the fact that heat of a portion immediately above a portion in contact with the coolant in the bottom surface portion 10a of the battery pack 10 is easily absorbed by the coolant. Therefore, by widening the contact area between the coolant and the battery pack 10, a portion to which heat is transferred can be widened, and further the cooling efficiency can be enhanced. A lower limit value of the interval between the water-cooling medium flow paths 25 is not particularly limited, but is preferably 10 mm or more. By setting the interval between the water-cooling medium flow paths 25 to 10 mm or more, it is possible to perform joining by spot welding or mechanical joining means, and it is easy to secure joint strength.

Furthermore, a ratio of the contact area between the water-cooling medium flow path 25 and the bottom surface portion 10a to an area of the bottom surface portion 10a is preferably 0.23 or more. As a result, the contact area between the coolant and the battery pack 10 can be widened, and further the cooling efficiency of the battery pack 10 can be enhanced. An upper limit value is not particularly limited, but may be about 0.80 since it is preferable to secure a joint strength between the joint portion 22 and the bottom surface portion 10a to some extent. From the viewpoint of a balance between joint strength and cooling efficiency, the above ratio is more preferably 0.23 to 0.71. That is, cooling performance of the cooling structure 20 is improved as the above ratio is larger, but it is preferable to consider a joint strength with the battery pack 10. From such a viewpoint, the above ratio is preferably 0.23 to 0.71.

A height of the water-cooling medium flow path 25, that is, a distance h in a thickness direction of the battery unit 1 from a bottom surface portion 21a of the flow path-forming portion 21 (a lower end portion 21a-1 of the flow path-forming portion 21 in the example of FIG. 4) to the joint portion 22 adjacent to the flow path-forming portion 21 is not particularly limited, but is preferably about 0.9 to 25.0 mm from the viewpoint of the cooling efficiency of the battery pack 10. On the other hand, an upper limit of the distance h is preferably 8.0 mm from the viewpoint of processability for forming a flow path. That is, by setting the height of the water-cooling medium flow path 25 to about 0.9 to 8.0 mm, both the cooling efficiency of the battery pack 10 and the processability for forming a flow path can be achieved.

The joint portion 22 is a member for joining the cooling structure 20 to the battery pack 10, and is joined to the battery pack 10 via a spot welded portion 30. Of course, the method of joining the joint portion 22 to the battery pack 10 is not limited to this example. For example, the joint portion 22 may be bonded to the battery pack 10 by mechanical joining or a joining member such as a screw. Furthermore, as illustrated in FIG. 1, a sealant 35 may be used for protecting the joint portion and improving sealability. It is also possible to use the sealant 35 as an adhesive (that is, as an adhesive between the joint portion 22 and the battery pack 10). Here, examples of the mechanical joining means (mechanical joining) include TOX (registered trademark) manufactured by TOX (registered trademark) PRESSOTECHNIK GmbH & Co. KG. In addition, the sealant contains a resin as a main component, and is an application-type organic substance containing a resin as a main component to be applied in order to prevent intrusion of a liquid such as water (coolant in the present invention) into a gap and leakage from a gap, and is also called a sealing agent or the like. Commercially available sealants or sealing agents can be used. Furthermore, an adhesive may be used as long as it has a sealing function. Use of an adhesive is more preferable because a strength of the joint portion is increased. When a sealing agent having adhesiveness such as an adhesive is used, joint strength can be secured without performing spot welding, mechanical joining, or the like. Therefore, the sealing agent can be applied without performing spot welding or mechanical joining. In particular, depending on a type of plating of the steel sheet constituting the battery pack 10 and a type of a film on the surface, resistance during welding is large, and spot weldability is poor, so that mechanical joining is suitable. In addition, a joint structure between the battery pack 10 and the cooling structure 20 is preferably a composite joint structure of a sealant and spot welding or a sealant and mechanical joining. Accordingly, it is possible to enhance a joint strength between the battery pack 10 and the cooling structure 20 while enhancing airtightness of the water-cooling medium flow path 25. In the examples illustrated in FIGS. 1, 4, and 5, the joint structure between the battery pack 10 and the cooling structure 20 is a composite joint structure of a sealant and spot welding.

The cooling structure 20 is manufactured, for example, by performing a forming process (for example, bending, drawing, and the like) to one Al-based plated steel sheet or the like. Therefore, the cooling structure 20 can be manufactured inexpensively and easily. That is, the cooling structure 20 can be manufactured with higher productivity compared with a die casting method, a casting method, or the like. The Al-based plated steel sheet has higher formability than that of an Al sheet. Therefore, the cooling structure 20 having a more complicated shape can be manufactured easily.

Here, a thickness of the Al-based plated steel sheet or the like constituting the cooling structure 20 is not particularly limited, but is, for example, preferably 0.4 to 2.0 mm, and more preferably 0.5 to 1.0 mm. In this case, it is possible to enhance processability of the cooling structure 20 (processability in manufacturing the cooling structure 20) while enhancing a strength of the cooling structure 20. In addition, the Al sheet has a high thermal conductivity, but by forming a thin Al-based plated steel sheet (that is, with the above-described thickness), a thermal conductivity similar to that of the Al sheet can be realized. Of course, the method of manufacturing the cooling structure 20 is not limited to this example. For example, the cooling structure 20 may be manufactured using a different Al-based plated steel sheet or the like for each of the water-cooling medium flow paths 25. In this example, the flow path-forming portion 21 corresponding to each of the water-cooling medium flow paths 25 may be formed by processing (for example, bending, drawing, and the like) each of the Al-based plated steel sheets or the like, and these may be joined to the battery pack 10.

As described above, in the present embodiment, the bottom surface portion 10a of the battery pack 10 and the cooling structure 20 exposed to an external environment and a coolant are made of an Al-based plated steel sheet or the like excellent in external corrosion resistance and coolant corrosion resistance, so that external corrosion resistance and coolant corrosion resistance of the battery unit 1 can be enhanced.

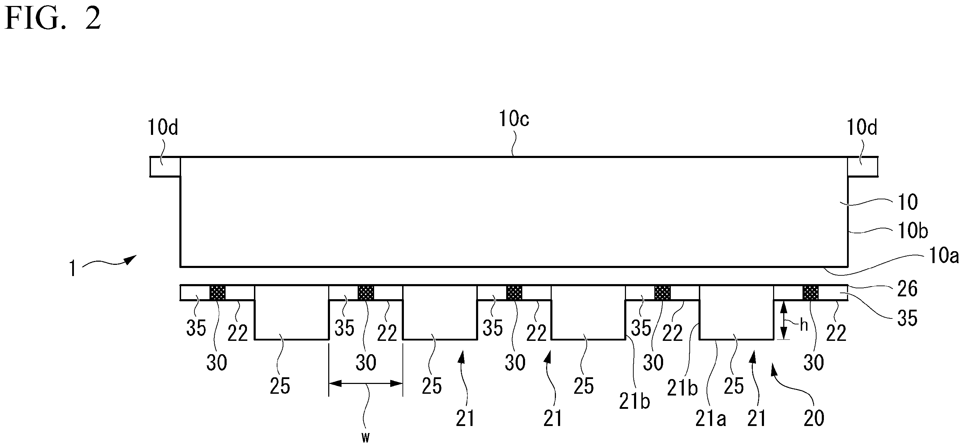

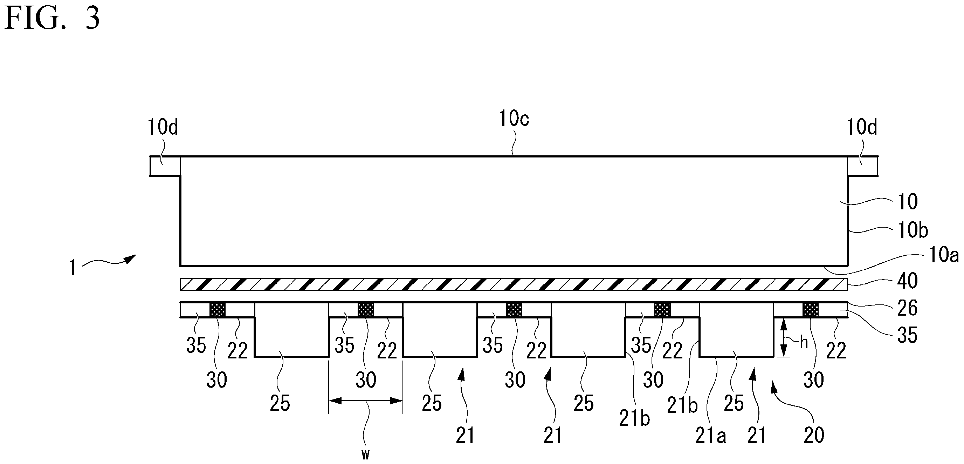

FIGS. 2 and 3 illustrate another example of the battery unit 1. In the example illustrated in FIG. 2, a flow path upper lid 26 is disposed between the cooling structure 20 and the battery pack 10. The flow path upper lid 26 is made of an Al-based plated steel sheet or the like. In the example of FIG. 3, a gap filler 40 is further disposed between the flow path upper lid 26 and the battery pack 10. In FIGS. 2 and 3, the flow path upper lid 26 and the gap filler 40 are drawn apart from other members in order to clarify a positional relationship between the members, but actually, the flow path upper lid 26, the gap filler 40, and other members are joined to each other. There is a case where it is difficult to join the bottom surface portion 10a and the cooling structure 20 (here, the flow path upper lid 26) without a gap due to some cause (errors in dimensional accuracy, complicated irregularity shapes formed on a surface of the bottom surface portion 10a of the battery unit 1, and the like). In such a case, the structure illustrated in FIG. 3 may be adopted. The gap filler 40 generally contains a pigment having high thermal conductivity in a resin, and heat exchange efficiency can be improved by inserting the gap filler 40 between different substances. In the present embodiment, a thermal conductivity of the gap filler 40 is preferably 3.5 W/m or more, and examples of the gap filler 40 include "SDP-3540-A" manufactured by Shin-Etsu Silicone. A thickness of the gap filler is preferably 0.1 mm to 8.0 mm, and more preferably 0.5 mm to 3.0 mm. As described above, when a gap is formed between the battery pack 10 and the cooling structure 20 due to a variation in dimensional accuracy or the like at the time of connecting the battery pack 10 and the cooling structure 20, the gap filler 40 or the like having thermal conductivity is inserted to fill the gap, so that heat exchangeability can be enhanced. However, the gap filler 40 preferably has a thermal conductivity lower than that of the Al-based plated steel sheet or the like, and is preferably 0.5 mm to 3.0 mm in order to fill a gap due to a variation in dimensional accuracy of members.

In the examples of FIGS. 2 and 3, the bottom surface portion 10a may not necessarily be made of the above-described metal material. This is because the bottom surface portion 10a does not come into contact with the coolant.

### <2. Configuration of Al-based plated steel sheet>

Next, an example of the Al-based plated steel sheet constituting the battery pack 10 and the flow path-forming portion 21 will be described in detail.

The Al-based plated steel sheet is a steel sheet on which a plating layer containing Al is formed. The plating layer of the Al-based plated steel sheet is, for example, two-component or multicomponent plating in which an Al content is 70 mass% or more, preferably an Al content is 70 to 98 mass% and a Si content is 2 to 15 mass%. A more preferable range of the Si content is 3 to 15 mass%. By setting the Si content within the above range, processability and corrosion resistance of the Al-based plated steel sheet can be enhanced. The plating layer may be formed only on one side of the steel sheet, but is preferably formed on both sides.

A trace amount of Fe, Ni, Co, or the like may be interposed as an impurity element in the plating layer. In addition, Mg, Sn, misch metal, Sb, Zn, Cr, W, V, Mo, and the like may be added as necessary. The method of manufacturing the aluminum-plated steel sheet is not particularly limited, but molten flux plating, and hot-dip plating, electroplating, and vapor deposition plating by a Sendzimir method, an all-radiant method, or the like are preferable.

The component of the base steel used for the Al-based plated steel sheet is not limited, but examples of the steel type include IF steel to which Ti, Nb, B, or the like is added, Al-k steel, Cr-added steel, stainless steel, high tensile strength steel, low-carbon steel, medium-carbon steel, high-carbon steel, and alloy steel.

The Al sheet may be made of pure Al or an Al alloy sheet having the same composition as that of the plating layer described above.

In order to further enhance external corrosion resistance and coolant corrosion resistance of the Al-based plated steel sheet or the like, a film containing a Zr-based component or a Ti-based component or a Si-based component as a main component (for example, 50 mass% or more in terms of mass%) is preferably formed as a chemical conversion coating film on a surface (may be only one side, but preferably both sides) of the Al-based plated steel sheet or the like. The film may contain an organic component.

Examples of the chemical conversion coating film include those listed in Japanese Unexamined Patent Application, First Publication No. 2008-115442, Japanese Unexamined Patent Application, First Publication No. 2013-7108, Japanese Unexamined Patent Application, First Publication No. 2004-232040, Japanese Patent Publication No. 3302676, Japanese Patent Publication No. 4776458, and Japanese Patent Publication No. 5336002. Therefore, the chemical conversion coating films listed in these publications can be suitably used as the chemical conversion coating film of the present embodiment. Here, an outline of the chemical conversion coating film will be described.

A first example of the chemical conversion coating film is an example of a film containing a Zr-based component as a main component, and is composed of only Zr, F, P, C, O, N, and H, and does not contain an organic substance having a number average molecular weight of 200 or more. The components are adjusted so that, among the constituent elements of the chemical conversion coating film, a mass ratio Zr/F of Zr to F is 1.0 to 10.0 and a mass ratio Zr/P of Zr to P is 8.5 to 18.0, and a Zr content contained in the chemical conversion coating film is 23.0 mass% to 48.0 mass%. A source of each component of the chemical conversion coating film is composed of one or more inorganic acids selected from the group consisting of carbonic acid, phosphoric acid, and hydrofluoric acid and/or ammonium salts thereof, and a zirconium-containing complex compound excluding zirconium hydrofluoric acid.

A second example of the chemical conversion coating film is an example of a film containing a Zr-based component as a main component, and contains (A) at least one or more among a titanium compound and a zirconium compound, (B) at least one or more among 2 to 6 bonded phosphate esters of myo-inositol, and alkali metal salts, alkaline earth metal salts, and ammonium salts thereof, and (C) silica. In this chemical conversion coating film, a mass ratio of (A) in terms of metal (Zr + Ti) : (B) : (C) is 1 : 0.2 to 1.7 : 0.2 to 5.

Examples of the titanium compound include potassium titanium oxalate, titanyl sulfate, titanium chloride, titanium lactate, titanium isopropoxide, isopropyl titanate, titanium ethoxide, titanium 2-ethyl-1-hexanolate, tetraisopropyl titanate, tetra-n-butyl titanate, and titania sol.

Examples of the zirconium compound include zirconyl nitrate, zirconyl acetate, zirconyl sulfate, zirconyl ammonium carbonate, potassium zirconium carbonate, sodium zirconium carbonate, and zirconium acetate.

Examples of the 2 to 6 bonded phosphate esters of myo-inositol include myo-inositol diphosphate ester, myo-inositol triphosphate ester, myo-inositol tetraphosphate ester, myo-inositol pentane phosphate ester, and myo-inositol hexane phosphate ester.

Examples of the silica include a water-dispersible silica compound. Examples of the water-dispersible silica compound include liquid-phase colloidal silica and gas-phase silica. The liquid-phase colloidal silica is not particularly limited, and examples thereof include SNOWTEX C, SNOWTEX O, SNOWTEX N, SNOWTEX S, SNOWTEX UP, SNOWTEX PS-M, SNOWTEX PS-L, SNOWTEX 20, SNOWTEX 30, SNOWTEX 40 (all manufactured by Nissan Chemical Industries, Ltd.), ADELITEAT-20N, ADELITE AT-20A, and ADELITE AT-20Q (all manufactured by Asahi Denka Kogyo K.K.).

The gas-phase silica is not particularly limited, and examples thereof include AEROSIL 50, AEROSIL 130, AEROSIL 200, AEROSIL 300, AEROSIL 380, AEROSIL TT600, AEROSIL MOX80, and AEROSIL MOX170 (all manufactured by NIPPON AEROSIL CO., LTD.).

A third example of the chemical conversion coating film is an example of a film containing a Zr-based component as a main component, and is a composite film composed of a zirconium compound, a vanadium compound, a silica compound, a phosphoric acid compound, and an organic compound having at least one functional group among a hydroxyl group, a carbonyl group, and a carboxyl group. This chemical conversion coating film contains 2 to 1200 mg/m² of zirconium, 0.1 to 300 mg/m² of vanadium, and 0.3 to 450 mg/m² of a phosphoric acid compound in terms of PO⁴ per one side of an Al-based plated steel sheet. Furthermore, in the chemical conversion coating film, a content of chromium or a chromium compound is 0.1 mg/m² or less in terms of chromium, and a content of fluorine or a fluorine compound is 0.1 mg/m² or less in terms of fluorine.

Examples of the zirconium compound include zirconyl nitrate, zirconyl acetate, zirconyl sulfate, zirconyl ammonium carbonate, potassium zirconium carbonate, sodium zirconium carbonate, and zirconium acetate.

Examples of the vanadium compound include vanadium pentoxide, metavanadic acid, ammonium metavanadate, sodium metavanadate, vanadium oxytrichloride, vanadium trioxide, vanadium dioxide, vanadium oxysulfate, vanadium oxyacetylacetonate, vanadium acetylacetonate, vanadium trichloride, phosphovanadomolybdic acid, vanadium sulfate, vanadium dichloride, and vanadium oxide.

Examples of the silica compound include a water-dispersible silica compound. Examples of the water-dispersible silica compound include colloidal silica and gas-phase silica, and examples of the colloidal silica include, but are not particularly limited to, SNOWTEX C, SNOWTEX O, SNOWTEX N, SNOWTEX S, SNOWTEX UP, SNOWTEX PS-M, SNOWTEX PS-L, SNOWTEX 20, SNOWTEX 30, SNOWTEX 40 (all manufactured by Nissan Chemical Industries, Ltd.), ADELITE AT-20N, ADELITE AT-20A, and ADELITE AT-20Q (all manufactured by Asahi Denka Kogyo K.K.).

The gas-phase silica is not particularly limited, and examples thereof include AEROSIL 50, AEROSIL 130, AEROSIL 200, AEROSIL 300, AEROSIL 380, AEROSIL TT600, AEROSIL MOX80, and AEROSIL MOX170 (all manufactured by NIPPON AEROSIL CO., LTD.).

The phosphoric acid compound may contain a phosphate ion. As the phosphoric acid compound, for example, orthophosphoric acid (phosphoric acid), metaphosphoric acid, pyrophosphoric acid, and salts such as an ammonium salt, a sodium salt, a calcium salt, and a potassium salt in which some or all of hydrogen ions of these substances are replaced can be used alone or in combination.

Examples of the organic compound having at least one functional group of a hydroxyl group, a carbonyl group, and a carboxyl group include alcohols such as methanol, ethanol, isopropanol, and ethylene glycol; carbonyl compounds such as formaldehyde, acetaldehyde, furfural, acetylacetone, ethyl acetoacetate, dipivaloylmethane, and 3-methylpentanedione; organic acids such as formic acid, acetic acid, propionic acid, tartaric acid, ascorbic acid, gluconic acid, citric acid, and malic acid; monosaccharides such as glucose, mannose, and galactose; oligosaccharides such as maltose and sucrose; natural polysaccharides such as starch and cellulose; aromatic compounds such as tannic acid, humic acid, lignin sulfonic acid, and polyphenol; and synthetic polymers such as polyvinyl alcohol, polyethylene glycol, polyacrylic acid, polyacrylamide, polyethyleneimine, and water-soluble nylon.

The chemical conversion coating film may contain a lubricity-imparting component composed of at least one of a polyolefin-based wax and a paraffin-based wax as an additional component.

A fourth example of the chemical conversion coating film is an example of a film containing a Ti-based component as a main component, and is a film in which an oxide or a hydroxide of a valve metal and a fluoride coexist. Examples of the valve metal include Ti and V. Among them, a tetravalent compound of Ti is a stable compound, and is preferable because a film having excellent characteristics can be formed. Examples of the film containing a Ti-based component as a main component include a film in which an oxide [TiO₂], a hydroxide [Ti(OH)₄], or the like is combined. In this film, a fluoride of Ti, for example, a fluoride such as XnTiF₆ (X: alkali metal, alkaline earth metal, or NH4, n = 1 or 2) or TiF₄ coexists.

A fifth example of the chemical conversion coating film is an example of a film containing a Si-based component as a main component, and is a chemical conversion coating film containing an organosilicon compound (silane coupling agent) as a main component. The organosilicon compound is obtained by blending a silane coupling agent (A) containing one amino group in the molecule and a silane coupling agent (B) containing one glycidyl group in the molecule at a solid content mass ratio [(A)/(B)] of 0.5 to 1.7. The organosilicon compound contains, in the molecule, two or more functional groups (a) represented by the formula -SiR¹R²R³ (wherein R¹, R², and R³ each independently represent an alkoxy group or a hydroxyl group, and at least one represents an alkoxy group) and one or more of at least one type of hydrophilic functional groups (b) selected from a hydroxyl group (which is separate from those that can be contained in the functional group (a)) and an amino group, and has an average molecular weight of 1000 to 10000.

A sixth example of the chemical conversion coating film is an example of a film containing a Si-based component as a main component, and is a chemical conversion coating film containing an organosilicon compound (silane coupling agent) as a main component. The organosilicon compound has a cyclic siloxane structure in its structure. Here, the term "cyclic siloxane bond" refers to a cyclic structure having a configuration in which Si-O-Si bonds are continuous and composed only of Si and O bonds and having a Si-O repetition number of 3 to 8.

The organosilicon compound is obtained by blending a silane coupling agent (A) containing at least one amino group in the molecule and a silane coupling agent (B) containing at least one glycidyl group in the molecule at a solid content mass ratio [(A)/(B)] of 0.5 to 1.7. It is preferable that the organosilicon compound (W) thus obtained contains, in the molecule, two or more functional groups (a) represented by the formula -SiR¹R³R³ (wherein R¹, R², and R³ each independently represent an alkoxy group or a hydroxyl group, and at least one of R¹, R², and R³ represents an alkoxy group) and one or more of at least one type of hydrophilic functional groups (b) selected from the group consisting of a hydroxyl group (which is separate from hydroxyl groups that can be contained in the functional group (a)) and an amino group, and has an average molecular weight of 1000 to 10000.

Of course, examples of the chemical conversion coating film of the present embodiment are not limited to the above, and for example, chemical conversion coating films listed in Examples described later can also be suitably used.

A method of forming the chemical conversion coating film described above is not particularly limited, and a chemical conversion coating solution (film coating solution) corresponding to each composition described above may be applied to a Zn-based plated steel sheet by a known method, and baked and dried.

### [Examples]

Hereinafter, the present invention will be described in more detail with reference to Examples. Examples described below are merely examples of the present invention, and do not limit the present invention.

### <Preparation of material>

As ultra-low carbon steel excellent in processability, steel having the steel components shown in Table 1 (the balance being iron and impurities) was hot-rolled, and subjected to pickling and cold rolling to prepare a cold-rolled steel sheet having a sheet thickness of 0.6 mm. Next, the cold-rolled steel sheet was subjected to hot-dip Al plating in an oxidation-free furnace type continuous hot-dip plating line to obtain an Al-plated steel sheet. As the plating line, an oxidation-free furnace-reduction furnace type line was used, and annealing was also performed in this hot-dip plating line. The annealing temperature was 850°C.

**[Table 1]**

| Chemical component (mass%) | | | | | | | |
|---|---|---|---|---|---|---|---|
| C | Si | Mn | P | S | Ti | Al | N |
| 0.0015 | 0.005 | 0.12 | 0.03 | 0.001 | 0.05 | 0.03 | 0.003 |

After the plating, the plating thickness was adjusted to about 40 g/m² on both sides by a gas wiping method. The bath temperature of the plating bath at the time of hot-dip plating was 660°C. As the plating bath, a molten Al bath to which Si was added as necessary was used. In the present example, a steel sheet plated in a plating bath to which Si was not added in a molten Al bath is also referred to as a "pure Al-plated steel sheet", a steel sheet plated in a bath to which 2 mass% of Si was added in a molten Al bath is also referred to as an "Al-2% Si-plated steel sheet", a steel sheet plated in a bath to which 9 mass% of Si was added in a molten Al bath is also referred to as an "Al-9% Si-plated steel sheet", a steel sheet plated in a bath to which 15 mass% of Si was added in a molten Al bath is also referred to as an "Al-15% Si-plated steel sheet", and a steel sheet plated in a bath to which 20 mass% of Si was added in a molten Al bath is also referred to as an "Al-20% Si-plated steel sheet".

In addition, as a comparison, a cold-rolled steel sheet subjected only to annealing in a continuous annealing line without plating was also prepared. Similarly, as a comparison, a Zn-plated steel sheet subjected to hot-dip Zn plating in an oxidation-free furnace type continuous hot-dip plating line was also prepared. As the composition of the Zn plating bath, a plating bath of Zn-0.2% Al generally called GI was used. The coating amount of Zn plating was adjusted so as to be 60 g/m² on one side. As the Al sheet, a commercially available aluminum sheet (A6063) having a thickness of 0.6 mm was prepared.

Next, the surface of the Al-based plated steel sheet or the like was coated with a chemical conversion coating solution by a roll coater as necessary. The coating amount of the chemical conversion coating solution was adjusted by adjusting the rotation speed of the roll coater and the pressure between the rolls (generally referred to as a nip pressure). The coating amount was 500 mg/m² per one side in terms of dry weight. After the chemical conversion coating solution was applied, the chemical conversion coating solution was dried in a hot air furnace under the condition that an achieving sheet temperature was 80°C. The chemical conversion coating was applied to both sides of the Al-based plated steel sheet or the like.

The chemical conversion coating solution used in the coating was three types of an aqueous solution in which γ-aminopropyltriethoxysilane was blended at 2.5 g/L as a Si-based chemical conversion coating solution, an aqueous solution in which ammonium zirconium carbonate was blended at 3 g/L as a Zr-based chemical conversion coating solution, and an aqueous solution in which ammonium titanium(IV) fluoride was blended at 40 g/L as a Ti-based chemical conversion coating solution. Details of the prepared Al-based plated steel sheet or the like are shown in Tables 3A to 3C.

### <Evaluation of prepared metal sheet>

### (0. Evaluation of strength)

The strength of the prepared Al-based plated steel sheet or the like was evaluated by a tensile test in accordance with the provision of JIS Z 2241. As a result, the strength of each of the Al-based plated steel sheets was 270 MPa or more. Then, the strength of the Al sheet was evaluated by the same method as described above, and the result was 200 MPa or less. Therefore, it was confirmed that the Al-based plated steel sheet had a high strength. Of course, the strength of the Al sheet is practically acceptable.

### (1. Evaluation of coolant resistance)

Coolant resistance was investigated when the prepared Al-based plated steel sheet or the like was used for a cooling structure (cooling device) of a battery unit. Specifically, the prepared Al-based plated steel sheet or the like was subjected to Erichsen processing to prepare a cup-shaped cylindrical product having Φ 50 mm and a drawing height of 40 mm. 30 mL of a coolant was added to the inside of this cylindrical product, and then the cylindrical product was sealed with a lid. As the coolant, an aqueous solution obtained by diluting a long-life coolant solution manufactured by Nissan Motor Co., Ltd. to 30 mass% with water was used. These were allowed to stand in a thermostatic bath at 90°C for 1000 hours to promote deterioration of the steel sheet in the coolant immersion portion. In addition, a similar test using a deteriorated solution obtained by adding 800 ppm of formic acid to a 30 mass% aqueous solution of the long-life coolant solution was also performed assuming a case where the coolant solution was deteriorated. After the test, the coolant immersed in the cylindrical product was removed, and the cylindrical product was dried. Thereafter, the corrosion state of the coolant immersion portion was observed, and the coolant resistance was evaluated according to the following criteria. The results are shown in Tables 3A to 3C.
5 points: No change in appearance
4 points: Discolored to black or dotted white rust was generated.
3 points: White rust was generated, but the white rust generation area of the coolant immersion portion was less than 20% with respect to the total area of the coolant immersion portion.
2 points: The white rust generation rate was 20% or more and less than 80%.
1 point: The white rust generation rate was 80% or more, or red rust was generated.

### (2. Corrosion resistance test)

A corrosion resistance test was performed as a corrosion resistance evaluation in a portion where the battery unit (including the cooling structure) was exposed to the outside air. Since it is common to apply electrodeposition coating to a portion exposed to the outside air, corrosion resistance after electrodeposition coating was evaluated in the present invention.

Specifically, a steel billet obtained by cutting the prepared Al-based plated steel sheet or the like into a size of width 70 mm × length 150 mm was subjected to degreasing, surface adjustment, and zinc phosphate treatment, and then electrodeposition coating was performed. Specifically, the steel billet was degreased by immersing the steel billet in a degreasing agent "FINE CLEANER E6408" manufactured by Nihon Parkerizing Co., Ltd. under the condition of 60°C for 5 minutes. The degreased steel billet was immersed in "PREPALENE-X" manufactured by Nihon Parkerizing Co., Ltd. under the condition of 40°C for 5 minutes to perform surface adjustment. Thereafter, the steel billet was immersed in a zinc phosphate chemical conversion agent "PALBOND L3065" manufactured by Nihon Parkerizing Co., Ltd. at 35°C for 3 minutes to perform zinc phosphate treatment. The steel billet after being subjected to the zinc phosphate treatment was washed with water and dried in an oven at 150°C. Thereafter, an electrodeposition coating material "Power Float 1200" manufactured by Nippon Paint Co., Ltd. was electrodeposition coated on the steel billet at a thickness of 15 µm per one side, and baked in an oven at 170°C for 20 minutes. The electrodeposition-coated steel billet prepared in the above steps was cut with a cutter knife to prepare a test piece.

A cyclic corrosion test (CCT) was performed using the prepared test piece. The mode of the CCT was performed according to an automobile industry standard, JASO-M609. A surface of the electrodeposition-coated film having a cut was used as an evaluation surface, and a cyclic corrosion test was performed by installing the electrodeposition-coated film in a tester so that salt water was sprayed onto the evaluation surface.

The test was performed 120 cycles (1 cycle for 8 hours), and the corrosion state from the cut portion was observed to evaluate corrosion resistance according to the following criteria. The results are shown in Tables 3A to 3C.
5 points: A case where the swelling width of the coated film from the cut portion was 15 mm or less and red rust was not generated
4 points: A case where the swelling width of the coated film from the cut portion was more than 15 mm and 20 mm or less, and red rust was not generated
3 points: A case where the swelling width of the coated film from the cut portion was more than 20 mm or less and red rust was not generated
2 points: A case where red rust was slightly generated from the cut portion
1 point: A case where red rust was generated from the entire surface of the cut portion

### (3. Evaluation of processability)

A bending test was performed using the prepared Al-based plated steel sheet or the like. In particular, when a crack is generated on the surface of the plated steel sheet when the plated steel sheet is processed, the plating layer is cracked to expose the iron base to the outside air. Therefore, there is a possibility that corrosion is likely to occur from the processed portion depending on the processed shape, and thus processability was evaluated. Specifically, the prepared Al-based plated steel sheet or the like was subjected to 180° adhesion bending, the processed portion was confirmed with a 20× loupe, and the processability was visually evaluated. Specifically, the processability was evaluated based on whether or not cracks were generated on the surface. The results are shown in Tables 3A to 3C.

### <Evaluation of cooling characteristics in battery unit>

### (1. Preparation of battery unit)

The battery unit 1 illustrated in FIG. 3 was prepared using the prepared Al-based plated steel sheet or the like. Specifically, flat plate materials only subjected to cutting were used as the case upper lid (upper surface portion 10c) and the flow path upper lid 26. An Al-based plated steel sheet or the like prepared separately was subjected to rectangular tube deep drawing by a pressing machine, and a flange portion was cut after the drawing, thereby preparing other portions (bottom surface portion 10a and side surface portion 10b) of the battery pack 10. In addition, the bottom surface portion 10a of the battery pack 10 was processed to have a width of 315 mm × a length of 2000 mm. During processing, a rust preventive oil was applied to the Al-based plated steel sheet or the like, and the oil was removed by alkali degreasing after processing. The rectangular tube-shaped punch shoulder R, die shoulder R, and corner R were all 20 mm. The cooling structure 20 was also prepared by pressing. Each R in the cooling structure 20 was set to 10 mm, and the cooling structure 20 was prepared so that the number of flow paths, the flow path width, and the distance between the flow paths have the values shown in Table 2.

**[Table 2]**

| Interval between flow paths | Flow path width | Number of flow paths | Area ratio of cooling flow path to battery bottom surface |
|---|---|---|---|
| 10 mm | 51 mm | 5 | 0.81 |
| 15 mm | 45 mm | 5 | 0.71 |
| 18 mm | 15 mm | 9 | 0.43 |
| 30 mm | 41.25 mm | 4 | 0.52 |
| 30 mm | 27 mm | 5 | 0.43 |
| 30 mm | 17.5 mm | 6 | 0.23 |
| 40 mm | 15 mm | 5 | 0.23 |
| 45 mm | 9 mm | 5 | 0.14 |
| 5 mm | 57 mm | 5 | 0.9 |
| 50 mm | 3 mm | 5 | 0.048 |

Subsequently, the sealant 35 was applied to the joint portion 22 of the cooling structure 20 as illustrated in FIG. 3, and the cooling structure 20 and the flow path upper lid 26 were superimposed on each other. Next, the joint portion 22 and the flow path upper lid 26 were joined by spot welding. Hereinafter, spot welding is also referred to as "SW". At some levels, the joint portion 22 and the flow path upper lid 26 were joined by using a mechanical joining method "TOX" (registered trademark) manufactured by TOX (registered trademark) PRESSOTECHNIK GmbH & Co. KG instead of spot welding. When the interval between the water-cooling medium flow paths 25 was as narrow as less than 10 mm, and a welding tip for spot welding could not be inserted and could not be welded, both were bonded only by the sealant. The cooling structure 20 was then left at room temperature for 2 weeks to cure the sealant. As the sealant, "SEALANT 45N" manufactured by Shin-Etsu Silicone was used.

Next, "SDP-3540-A" manufactured by Shin-Etsu Silicone was applied to the entire outer surface of the flow path upper lid 26, and the bottom surface portion 10a of the battery pack 10 was attached thereon as illustrated in FIG. 3 and left at room temperature for 1 week to cure the gap filler 40. Through the above steps, the battery unit 1 illustrated in FIG. 3 was manufactured. The battery unit 1 illustrated in FIGS. 1 and 2 was also manufactured. Specifically, the battery pack 10 was directly joined to the flow path upper lid 26 as illustrated in FIG. 2. At this time, the flow path upper lid 26 and the battery pack 10 were joined with a screw. In addition, the sealant 35 was applied to the cooling structure 20 as illustrated in FIG. 1, and the cooling structure 20 and the battery pack 10 were superimposed on each other. Next, the joint portion 22 and the battery pack 10 were joined by spot welding. When the interval between the water-cooling medium flow paths 25 was as narrow as less than 10 mm, and a welding tip for spot welding could not be inserted and could not be welded, both were bonded only by the sealant.

Then, the bottom surface of the inside of the battery pack 10 was covered with a rubber heater as a substitute for a battery cell that generates heat, and the battery pack 10 was covered with the case upper lid. When the lid was put on, the sealant 10d was applied to the case flange portion to seal the battery pack. As the sealant, "SEALANT 45N" manufactured by Shin-Etsu Silicone was used. The metal materials constituting the battery pack 10 and the cooling structure 20 were the same. That is, the battery pack 10, the flow path upper lid 26, and the cooling structure 20 constituting one battery unit 1 are made of the same metal material.

### (2. Cooling characteristics evaluation test of battery unit)

A current was applied to the rubber heater of the prepared battery unit 1 to heat the battery unit 1. Here, a current value at which the surface temperature of the rubber heater was 50°C was searched in advance, and the current value was set to a fixed value and applied to the rubber heater. Then, a coolant was caused to flow through the water-cooling medium flow path 25. As the coolant, an aqueous solution obtained by diluting a long-life coolant solution manufactured by PITWORK to 30 mass% with water was used. In addition, hoses, pumps, and chillers were attached to flow path ends on both sides of the cooling structure 20 to constitute a circulation path, and the coolant was circulated in this circulation path. Here, the chillers were controlled so that the temperature of the cooling water was 25 to 30°C. Then, the temperature of the surface of the rubber heater in the case immediately above the intermediate portion between the cooling flow paths after 1 hour from the start of the cooling water circulation was measured, and a case where the temperature was 8°C or more lower than that in a state where the cooling water was not circulated was evaluated as Excellent, a case where the temperature decrease was less than 8°C and 5°C or more was evaluated as Good, a case where the temperature decrease was less than 5°C and 2°C or more was evaluated as Fair, and a case where the temperature decrease was less than 2°C was evaluated as Poor. The cooling characteristics evaluation test of the battery unit 1 was performed in a room kept at 25°C by air conditioning. The results are shown in Tables 3A to 3C.

**[Table 3A]**

| No. | Steel sheet type | Chemical conversion coating | Coolant resistance | | Corrosion resistance | Processability | Interval between flow paths | Number of flow paths | Flow path width | Area ratio of cooling flow path to battery bottom surface | Joining method | Battery unit structure | | | Remarks |
|---|---|---|---|---|---|---|---|---|---|---|---|---|---|---|---|
| | | | Without formic acid | With formic acid | | | | | | | | Case-cooling structure (FIG. 1) | Case-upper lid-cooling structure (FIG. 2) | Case-G.F.-upper lid-cooling structure (FIG. 3) | |
| 1 | Al-9% Si-plated steel sheet | None | 5 points | 5 points | 4 points | No crack | 10 mm | 5 | 51 mm | 0.81 | TOX^{®} + sealant | Excellent | Excellent | Excellent | Example of the invention of the present application |
| 2 | Al-9% Si-plated steel sheet | None | 5 points | 5 points | 4 points | No crack | 10 mm | 5 | 51 mm | 0.81 | SW + sealant | Excellent | Excellent | Excellent | Example of the invention of the present application |
| 3 | Al-9% Si-plated steel sheet | None | 5 points | 5 points | 4 points | No crack | 15 mm | 5 | 45 mm | 0.71 | SW + sealant | Excellent | Excellent | Excellent | Example of the invention of the present application |
| 4 | Al-9% Si-plated steel sheet | None | 5 points | 5 points | 4 points | No crack | 18 mm | 9 | 15 mm | 0.43 | SW + sealant | Excellent | Excellent | Good | Example of the invention of the present application |
| 5 | Al-9% Si-plated steel sheet | None | 5 points | 5 points | 4 points | No crack | 30mm | 4 | 41.25 mm | 0.52 | SW + sealant | Excellent | Excellent | Good | Example of the invention of the present application |
| 6 | Al-9% Si-plated steel sheet | None | 5 points | 5 points | 4 points | No crack | 30mm | 5 | 27 mm | 0.43 | SW + sealant | Excellent | Good | Good | Example of the invention of the present application |
| 7 | Al-9% Si-plated steel sheet | None | 5 points | 5 points | 4 points | No crack | 30 mm | 6 | 17.5 mm | 0.23 | SW + sealant | Excellent | Good | Good | Example of the invention of the present application |
| 8 | Al-9% Si-plated steel sheet | None | 5 points | 5 points | 4 points | No crack | 40 mm | 5 | 15 mm | 0.23 | SW + sealant | Excellent | Good | Good | Example of the invention of the present application |
| 9 | Al-9% Si-plated steel sheet | None | 5 points | 5 points | 4 points | No crack | 45 mm | 5 | 9 mm | 0.14 | SW + sealant | Fair | Fair | Fair | Example of the invention of the present application |
| 10 | Al-9% Si-plated steel sheet | None | 5 points | 5 points | 5 points | No crack | 50 mm | 5 | 3 mm | 0.048 | SW + sealant | Poor | Poor | Poor | Example of the invention of the present application |
| 11 | Al-9% Si-plated steel sheet | None | 5 points | 5 points | 4 points | No crack | 5 mm | 5 | 57 mm | 0.9 | Sealant | Excellent | Excellent | Excellent | Example of the invention of the present application |
| 12 | Al-9% Si-plated steel sheet | Si-based chemical conversion coating | 5 points | 5 points | 5 points | No crack | 10 mm | 5 | 51 mm | 0.81 | TOX^{®} + sealant | Excellent | Excellent | Excellent | Example of the invention of the present application |
| 13 | Al-9% Si-plated steel sheet | Si-based chemical conversion coating | 5 points | 5 points | 5 points | No crack | 10 mm | 5 | 51 mm | 0.81 | SW + sealant | Excellent | Excellent | Excellent | Example of the invention of the present application |
| 14 | Al-9% Si-plated steel sheet | Si-based chemical conversion coating | 5 points | 5 points | 5 points | No crack | 15 mm | 5 | 45 mm | 0.71 | SW + sealant | Excellent | Excellent | Excellent | Example of the invention of the present application |
| 15 | Al-9% Si-plated steel sheet | Si-based chemical conversion coating | 5 points | 5 points | 5 points | No crack | 15 mm | 5 | 45 mm | 0.71 | TOX^{®} + sealant | Excellent | Excellent | Excellent | Example of the invention of the present application |
| 16 | Al-9% Si-plated steel sheet | Si-based chemical conversion coating | 5 points | 5 points | 5 points | No crack | 18 mm | 9 | 15 mm | 0.43 | SW + sealant | Excellent | Excellent | Good | Example of the invention of the present application |

**[Table 3B]**

| No. | Steel sheet type | Chemical conversion coating | Coolant resistance | | Corrosion resistance | Processability | Interval between flow paths | Number of flow paths | Flow path width | Area ratio of cooling flow path to battery bottom surface | Joining method | Battery unit structure | | | Remarks |
|---|---|---|---|---|---|---|---|---|---|---|---|---|---|---|---|
| | | | Without formic acid | With formic acid | | | | | | | | Case-cooling structure (FIG. 1) | Case-upper lid-cooling structure (FIG. 2) | Case-G.F.-upper lid-cooling structure (FIG. 3) | |
| 17 | Al-9% Si-plated steel sheet | Si-based chemical conversion coating | 5 points | 5 points | 5 points | No crack | 30 mm | 4 | 41.25 mm | 0.52 | SW + sealant | Excellent | Excellent | Good | Example of the invention of the present application |
| 18 | Al-9% Si-plated steel sheet | Si-based chemical conversion coating | 5 points | 5 points | 5 points | No crack | 30 mm | 4 | 41.25 mm | 0.52 | TOX^{®} + sealant | Excellent | Excellent | Good | Example of the invention of the present application |
| 19 | Al-9% Si-plated steel sheet | Si-based chemical conversion coating | 5 points | 5 points | 5 points | No crack | 30 mm | 5 | 27 mm | 0.43 | SW + sealant | Excellent | Good | Good | Example of the invention of the present application |
| 20 | Al-9% Si-plated steel sheet | Si-based chemical conversion coating | 5 points | 5 points | 5 points | No crack | 30 mm | 6 | 17.5 mm | 0.23 | SW + sealant | Excellent | Good | Good | Example of the invention of the present application |
| 21 | Al-9% Si-plated steel sheet | Si-based chemical conversion coating | 5 points | 5 points | 5 points | No crack | 40 mm | 5 | 15 mm | 0.23 | SW + sealant | Excellent | Good | Good | Example of the invention of the present application |
| 22 | Al-9% Si-plated steel sheet | Si-based chemical conversion coating | 5 points | 5 points | 5 points | No crack | 45 mm | 5 | 9 mm | 0.14 | SW + sealant | Fair | Fair | Fair | Example of the invention of the present application |
| 23 | Al-9% Si-plated steel sheet | Si-based chemical conversion coating | 5 points | 5 points | 5 points | No crack | 50 mm | 5 | 3 mm | 0.048 | SW + sealant | Poor | Poor | Poor | Example of the invention of the present application |
| 24 | Al-9% Si-plated steel sheet | Si-based chemical conversion coating | 5 points | 5 points | 5 points | No crack | 5 mm | 5 | 57 mm | 0.9 | Sealant | Excellent | Excellent | Excellent | Example of the invention of the present application |
| 25 | Al-9% Si-plated steel sheet | Zr-based chemical conversion coating | 5 points | 5 points | 5 points | No crack | 10 mm | 5 | 51 mm | 0.81 | TOX^{®} + sealant | Excellent | Excellent | Excellent | Example of the invention of the present application |
| 26 | Al-9% Si-plated steel sheet | Zr-based chemical conversion coating | 5 points | 5 points | 5 points | No crack | 10 mm | 5 | 51 mm | 0.81 | SW + sealant | Excellent | Excellent | Excellent | Example of the invention of the present application |
| 27 | Al-9% Si-plated steel sheet | Zr-based chemical conversion coating | 5 points | 5 points | 5 points | No crack | 15 mm | 5 | 45 mm | 0.71 | SW + sealant | Excellent | Excellent | Excellent | Example of the invention of the present application |
| 28 | Al-9% Si-plated steel sheet | Zr-based chemical conversion coating | 5 points | 5 points | 5 points | No crack | 18 mm | 9 | 15 mm | 0.43 | SW + sealant | Excellent | Excellent | Good | Example of the invention of the present application |
| 29 | Al-9% Si-plated steel sheet | Zr-based chemical conversion coating | 5 points | 5 points | 5 points | No crack | 30 mm | 4 | 41.25 mm | 0.52 | SW + sealant | Excellent | Excellent | Good | Example of the invention of the present application |
| 30 | Al-9% Si-plated steel sheet | Zr-based chemical conversion coating | 5 points | 5 points | 5 points | No crack | 30 mm | 5 | 27 mm | 0.43 | SW + sealant | Excellent | Good | Good | Example of the invention of the present application |
| 31 | Al-9% Si-plated steel sheet | Zr-based chemical conversion coating | 5 points | 5 points | 5 points | No crack | 30 mm | 6 | 17.5 mm | 0.23 | SW + sealant | Excellent | Good | Good | Example of the invention of the present application |
| 32 | Al-9% Si-plated steel | Zr-based chemical | 5 points | 5 points | 5 points | No crack | 40 mm | 5 | 15 mm | 0.23 | SW + sealant | Excellent | Good | Good | Example of the invention |
| | sheet | conversion coating | | | | | | | | | | | | | of the present application |
| 33 | Al-9% Si-plated steel sheet | Zr-based chemical conversion coating | 5 points | 5 points | 5 points | No crack | 45 mm | 5 | 9 mm | 0.14 | SW + sealant | Fair | Fair | Fair | Example of the invention of the present application |
| 34 | Al-9% Si-plated steel sheet | Zr-based chemical conversion coating | 5 points | 5 points | 5 points | No crack | 50 mm | 5 | 3 mm | 0.05 | SW + sealant | Poor | Poor | Poor | Example of the invention of the present application |
| 35 | Al-9% Si-plated steel sheet | Zr-based chemical conversion coating | 5 points | 5 points | 5 points | No crack | 5 mm | 5 | 57 mm | 0.9 | Only sealant | Excellent | Excellent | Excellent | Example of the invention of the present application |

**[Table 3C]**

| No. | Steel sheet type | Chemical conversion coating | Coolant resistance | | Corrosion resistance | Processability | Interval between flow paths | Number of flow paths | Flow path width | Area ratio of cooling flow path to battery bottom surface | Joining method | Battery unit structure | | | Remarks |
|---|---|---|---|---|---|---|---|---|---|---|---|---|---|---|---|
| | | | Without formic acid | With formic acid | | | | | | | | Case-cooling structure (FIG. 1) | Case-upper lid-cooling structure (FIG. 2) | Case-G.F.-upper lid-cooling structure (FIG. 3) | |
| 36 | Al-9% Si-plated steel sheet | Ti-based chemical conversion coating | 5 points | 5 points | 5 points | No crack | 10 mm | 5 | 51 mm | 0.81 | TOX^{®} + sealant | Excellent | Excellent | Excellent | Example of the invention of the present application |
| 37 | Al-9% Si-plated steel sheet | Ti-based chemical conversion coating | 5 points | 5 points | 5 points | No crack | 10 mm | 5 | 51 mm | 0.81 | SW + sealant | Excellent | Excellent | Excellent | Example of the invention of the present application |
| 38 | Al-9% Si-plated steel sheet | Ti-based chemical conversion coating | 5 points | 5 points | 5 points | No crack | 15 mm | 5 | 45 mm | 0.71 | SW + sealant | Excellent | Excellent | Excellent | Example of the invention of the present application |
| 39 | Al-9% Si-plated steel sheet | Ti-based chemical conversion coating | 5 points | 5 points | 5 points | No crack | 18 mm | 9 | 15 mm | 0.43 | SW + sealant | Excellent | Excellent | Good | Example of the invention of the present application |
| 40 | Al-9% Si-plated steel sheet | Ti-based chemical conversion coating | 5 points | 5 points | 5 points | No crack | 30 mm | 4 | 41.25 mm | 0.52 | SW + sealant | Excellent | Excellent | Good | Example of the invention of the present application |
| 41 | Al-9% Si-plated steel sheet | Ti-based chemical conversion coating | 5 points | 5 points | 5 points | No crack | 30 mm | 5 | 27 mm | 0.43 | SW + sealant | Excellent | Good | Good | Example of the invention of the present application |
| 42 | Al-9% Si-plated steel sheet | Ti-based chemical conversion coating | 5 points | 5 points | 5 points | No crack | 30 mm | 6 | 17.5 mm | 0.23 | SW + sealant | Excellent | Good | Good | Example of the invention of the present application |
| 43 | Al-9% Si-plated steel sheet | Ti-based chemical conversion coating | 5 points | 5 points | 5 points | No crack | 40 mm | 5 | 15 mm | 0.23 | SW + sealant | Excellent | Good | Good | Example of the invention of the present application |
| 44 | Al-9% Si-plated steel sheet | Ti-based chemical conversion coating | 5 points | 5 points | 5 points | No crack | 45 mm | 5 | 9 mm | 0.14 | SW + sealant | Fair | Fair | Fair | Example of the invention of the present application |
| 45 | Al-9% Si-plated steel sheet | Ti-based chemical conversion coating | 5 points | 5 points | 5 points | No crack | 50 mm | 5 | 3 mm | 0.05 | SW + sealant | Poor | Poor | Poor | Example of the invention of the present application |
| 46 | Al-9% Si-plated steel sheet | Ti-based chemical conversion coating | 5 points | 5 points | 5 points | No crack | 5 mm | 5 | 57 mm | 0.9 | Only sealant | Excellent | Excellent | Excellent | Example of the invention of the present application |
| 47 | Al-2% Si-plated steel sheet | Zr-based chemical conversion coating | 5 points | 5 points | 5 points | No crack | 30 mm | 5 | 27 mm | 0.43 | SW + sealant | Excellent | Good | Good | Example of the invention of the present application |
| 48 | Al-15% Si-plated steel sheet | Zr-based chemical conversion coating | 5 points | 5 points | 5 points | No crack | 30 mm | 5 | 27 mm | 0.43 | SW + sealant | Excellent | Good | Good | Example of the invention of the present application |
| 49 | Pure Al-plated steel sheet | Zr-based chemical conversion coating | 5 points | 5 points | 5 points | Crack | 30 mm | 5 | 27 mm | 0.43 | SW + sealant | Excellent | Good | Good | Example of the invention of the present application |
| 50 | Al-20% Si-plated steel sheet | Zr-based chemical conversion coating | 5 points | 5 points | 5 points | Crack | 30 mm | 5 | 27 mm | 0.43 | SW + sealant | Excellent | Good | Good | Example of the invention of the present application |
| 51 | Al sheet | Zr-based chemical conversion coating | 5 points | 5 points | 5 points | No crack | 30 mm | 5 | 27 mm | 0.43 | SW + sealant | Excellent | Excellent | Excellent | Example of the invention of the present application |
| 52 | Zn-plated steel sheet | None | 1 point | 1 point | 5 points | No crack | 30 mm | 5 | 27 mm | 0.43 | SW + sealant | Excellent | Good | Good | Comparative Example |
| 53 | Cold-rolled steel sheet | None | 4 points | 1 point | 1 point | No crack | 30 mm | 5 | 27 mm | 0.43 | SW + sealant | Excellent | Good | Good | Comparative Example |

As shown in Tables 3A to 3C, in the examples of the invention of the present application satisfying the requirements of the present embodiment, excellent results were obtained in terms of not only corrosion resistance to a coolant (coolant corrosion resistance) but also corrosion resistance to an external environment (external corrosion resistance). In addition, evaluation results with high cooling efficiency were obtained in most of the examples of the invention of the present application. Although cracks were generated in Test Nos. 45 and 46, it was determined that there was no problem because high evaluation was obtained in terms of coolant resistance and corrosion resistance. Particularly excellent results were obtained when the interval between the water-cooling medium flow paths was 40 mm or less, the chemical conversion coating film was formed, and the content of Si in the plating layer was 2.0 mass% or more and 15 mass% or less. Therefore, it was found that the battery unit 1 according to the present embodiment is excellent not only in corrosion resistance to a coolant (coolant corrosion resistance) but also in corrosion resistance to an external environment (external corrosion resistance).

On the other hand, in Comparative Examples not satisfying the requirements of the present embodiment, for example, in Comparative Examples not provided with plating and the like, poor results were obtained in either (or both) of the coolant corrosion resistance and the external corrosion resistance.

Although the preferred embodiments of the present invention have been described in detail with reference to the accompanying drawings, the present invention is not limited to such examples. It is obvious that a person having ordinary knowledge in the technical field to which the present invention belongs can conceive various changes or modifications within the scope of the technical idea described in the claims, and it is naturally understood that these also belong to the technical scope of the present invention.

### [Brief Description of the Reference Symbols]

1 Battery unit
10 Battery pack
10a Bottom surface portion
10b Side surface portion
10c Upper surface portion
20 Cooling structure
21 Flow path-forming portion
22 Joint portion
25 Water-cooling medium flow path
30 Spot welded portion

## Claims

1. A battery unit comprising: a battery pack that houses a battery cell; and a water-cooling medium flow path formed outside a bottom surface of the battery pack,
wherein the water-cooling medium flow path of the battery pack is made of an Al-based plated steel sheet or an Al sheet.

2. The battery unit according to claim 1, wherein an interval between the water-cooling medium flow paths is 40 mm or less.

3. The battery unit according to claim 1 or 2, wherein the bottom surface of the battery pack is made of a member obtained by processing an Al-based plated steel sheet or an Al sheet, and the water-cooling medium flow path is in direct contact with the bottom surface of the battery pack.

4. The battery unit according to claim 1 or 2, wherein the water-cooling medium flow path is joined to a flow path upper lid made of an Al-based plated steel sheet or an Al sheet, and the water-cooling medium flow path is joined to the bottom surface of the battery pack via the flow path upper lid.

5. The battery unit according to any one of claims 1 to 4, wherein an interval between the water-cooling medium flow paths is 10 mm or more and 40 mm or less.

6. The battery unit according to any one of claims 1 to 5, wherein an interval between the water-cooling medium flow paths is 10 mm or more and 40 mm or less, and
a joint between the bottom surface of the battery pack and the water-cooling medium flow path has a composite joint structure of a sealant and spot welding or a sealant and mechanical joining.

7. The battery unit according to any one of claims 1 to 6, wherein Si is contained in a plating layer of the Al-based plated steel sheet.

8. The battery unit according to claim 7, wherein a Si content in the plating layer of the Al-based plated steel sheet is 2.0 mass% or more and 15 mass% or less.

9. The battery unit according to any one of claims 1 to 8, wherein a film containing a Zr-based component or a Ti-based component or a Si-based component as a main component is formed as a chemical conversion coating film on a surface of the Al-based plated steel sheet or the Al sheet.

## Amended claims

### Amended claims under Art. 19.1 PCT

1. (Amended) A battery unit comprising: a battery pack that houses a battery cell; and a water-cooling medium flow path formed outside a bottom surface of the battery pack,
wherein the water-cooling medium flow path of the battery pack is made of an Al-based plated steel sheet.

2. The battery unit according to claim 1, wherein an interval between the water-cooling medium flow paths is 40 mm or less.

3. The battery unit according to claim 1 or 2, wherein the bottom surface of the battery pack is made of a member obtained by processing an Al-based plated steel sheet or an Al sheet, and the water-cooling medium flow path is in direct contact with the bottom surface of the battery pack.

4. The battery unit according to claim 1 or 2, wherein the water-cooling medium flow path is joined to a flow path upper lid made of an Al-based plated steel sheet or an Al sheet, and the water-cooling medium flow path is joined to the bottom surface of the battery pack via the flow path upper lid.

5. The battery unit according to any one of claims 1 to 4, wherein an interval between the water-cooling medium flow paths is 10 mm or more and 40 mm or less.

6. The battery unit according to any one of claims 1 to 5, wherein an interval between the water-cooling medium flow paths is 10 mm or more and 40 mm or less, and
a joint between the bottom surface of the battery pack and the water-cooling medium flow path has a composite joint structure of a sealant and spot welding or a sealant and mechanical joining.

7. The battery unit according to any one of claims 1 to 6, wherein Si is contained in a plating layer of the Al-based plated steel sheet.

8. The battery unit according to claim 7, wherein a Si content in the plating layer of the Al-based plated steel sheet is 2.0 mass% or more and 15 mass% or less.

9. (Amended) The battery unit according to any one of claims 1 to 8, wherein a film containing a Zr-based component or a Ti-based component or a Si-based component as a main component is formed as a chemical conversion coating film on a surface of the Al-based plated steel sheet.

Statement under Art. 19.1 PCT
Claim 1 has been amended as per the attached sheet. The basis for this amendment is described in paragraph [0025] of the specification of the present application. This amendment clarified that in claim 1, "the water-cooling medium flow path of the battery pack is made of an Al-based plated steel sheet".

In association with this amendment, it was clarified that in claim 9, "a film containing a Zr-based component or a Ti-based component or a Si-based component as a main component is formed as a chemical conversion coating film on a surface of the Al-based plated steel sheet".

Therefore, no new matter is added.
